# EUROPEAN PATENT APPLICATION

(11) **EP 4 776 465 A1**
(43) Date of publication of application: **15.07.2026**
(21) Application number: 25747031.0
(22) Date of filing: 06.08.2025
(51) Int. Cl.: H02J 7/00, H02J 7/34, H02M 3/07, H01M 10/44

(54) **ELECTRONIC DEVICE FOR BOOSTING BATTERY VOLTAGE USING CHARGER AND OPERATION METHOD THEREOF**

(30) Priority: 08.08.2024 KR 20240105822; 17.10.2024 KR 20240142040
(71) Applicant: Samsung Electronics Co., Ltd, Suwon-si, Gyeonggi-do 16677 (KR)
(72) Inventor: GU, Beomwoo, Suwon-si, Gyeonggi-do 16677 (KR); CHOI, Hangseok, Suwon-si, Gyeonggi-do 16677 (KR)
(74) Representative: Gulde & Partner
(86) International application number: PCT/KR2025/011821
(87) International publication number: WO 2026/035025

(57) **Abstract**

According to an embodiment, an electronic device (201) may include a battery (270), a switched capacitor voltage divider, SCVD (250) including a plurality of switches (Q1, Q2, Q3, Q4) and a flying capacitor (CF), and configured to convert a voltage of externally supplied power according to a specified ratio and supply the converted voltage to the battery or a system (280) of the electronic device, a switch circuit arranged between the SCVD and a node (350) for supplying power to the system, and a control circuit (220). According to an embodiment, the control circuit may be configured to identify a battery voltage (VBAT) output from the battery. According to an embodiment, the control circuit may be configured to, based on identifying that the battery voltage is lower than a specified voltage, control the plurality of switches included in the SCVD so that the flying capacitor and the battery are connected in series during a first time period of a switching cycle of the plurality of switches. According to an embodiment, the control circuit may be configured to control the plurality of switches so that the flying capacitor and the battery are connected in parallel during a second time period after the first time period of the switching cycle. According to an embodiment, based on applying a voltage that is a sum of a charging voltage of the flying capacitor and the battery voltage to the switch circuit according to a duty ratio representing a ratio of the first time period to the switching cycle, a first voltage higher than the specified voltage may be supplied to the node through the switch circuit.

## Description

### [Technical Field]

The disclosure relates to an electronic device for boosting a battery voltage using a charger, and a method of operating the same.

### [Background Art]

Recently, the use of portable electronic devices such as smartphones, tablet PCs, wearable devices, or augmentation reality (AR) glasses has been increasing. An electronic device may include various components. The electronic device may include a charging circuit for supplying power to various components (e.g., a load of the electronic device).

### [Disclosure of Invention]

### [Solution to Problems]

According to an embodiment, an electronic device 201 may include a battery 270, a switched capacitor voltage divider SCVD 250 including a plurality of switches Q1, Q2, Q3, and Q4 and a flying capacitor CF, and configured to convert a voltage of externally supplied power according to a specified ratio and supply the converted voltage to the battery or a system of the electronic device, a switch circuit arranged between the SCVD and a node 350 for supplying power to the system, and a control circuit 220. According to an embodiment, the control circuit may be configured to identify a battery voltage VBAT output from the battery. According to an embodiment, the control circuit may be configured to, based on identifying that the battery voltage is lower than a specified voltage, control the plurality of switches included in the SCVD so that the flying capacitor and the battery are connected in series during a first time period of a switching cycle of the plurality of switches. According to an embodiment, the control circuit may be configured to control the plurality of switches so that the flying capacitor and the battery are connected in parallel during a second time period after the first time period of the switching cycle. According to an embodiment, based on applying a voltage that is a sum of a charging voltage of the flying capacitor and the battery voltage to the switch circuit according to a duty ratio representing a ratio of the first time period to the switching cycle, a first voltage higher than the specified voltage may be supplied to the node through the switch circuit.

According to an embodiment, a method of operating an electronic device may include identifying a battery voltage VBAT output from a battery included in the electronic device. According to an embodiment, the method of operating the electronic device may include, based on identifying that the battery voltage is lower than a specified voltage, controlling a plurality of switches included in an SCVD so that a flying capacitor included in the SCVD and the battery are connected in series during a first time period of a switching cycle of the plurality of switches. According to an embodiment, the method of operating the electronic device may include controlling the plurality of switches so that the flying capacitor and the battery are connected in parallel during a second time period after the first time period of the switching cycle. Based on applying a voltage that is a sum of a charging voltage of the flying capacitor and the battery voltage to a switch circuit arranged between the SCVD (250) and a node (350) for supplying power to a system (280) according to a duty ratio representing a ratio of the first time period to the switching cycle, a first voltage higher than the specified voltage may be supplied to the node through the switch circuit.

A non-transitory computer-readable recording medium may store instructions which, when executed by at least one processor, enable an electronic device to identify a battery voltage VBAT output from a battery included in the electronic device, based on identifying that the battery voltage is lower than a specified voltage, control a plurality of switches included in an SCVD so that a flying capacitor included in the SCVD and the battery are connected in series during a first time period of a switching cycle of the plurality of switches, and control the plurality of switches so that the flying capacitor and the battery are connected in parallel during a second time period after the first time period of the switching cycle. Based on applying a voltage that is a sum of a charging voltage of the flying capacitor and the battery voltage to a switch circuit arranged between the SCVD (250) and a node (350) for supplying power to a system (280) according to a duty ratio representing a ratio of the first time period to the switching cycle, a first voltage higher than the specified voltage may be supplied to the node through the switch circuit.

### [Brief Description of Drawings]

FIG. 1 is a block diagram illustrating an electronic device in a network environment according to an embodiment.
FIG. 2 is a schematic block diagram illustrating a configuration of an electronic device according to an embodiment.
FIG. 3 is a circuit diagram including a switched capacitor voltage divider (SCVD) and a switch circuit according to an embodiment.
FIG. 4 is a flowchart illustrating a method of supplying, to a system, a first voltage boosted from a battery voltage using a switched capacitor voltage divider (SCVD) by an electronic device according to an embodiment.
FIG. 5A is a diagram illustrating a first mode of an SCVD according to an embodiment.
FIG. 5B is a diagram illustrating a second mode of an SCVD according to an embodiment.
FIGS. 6A and 6B are graphs illustrating a battery voltage, a charging voltage of a flying capacitor, a first voltage supplied to a system, and a voltage applied to a switch circuit in each mode according to an embodiment.
FIGS. 7A and 7B are diagrams illustrating a method of charging a battery using an SCVD according to an embodiment.
FIG. 8 is graphs illustrating a battery voltage, a charging voltage of a flying capacitor, a first voltage supplied to a system, and a voltage applied to a switch circuit, when a battery is charged according to an embodiment.
FIG. 9 is a diagram illustrating a switch circuit arranged between an SCVD and a node for supplying power to a system according to an embodiment.
FIG. 10 is a diagram illustrating a switch circuit arranged between an SCVD and a node for supplying power to a system according to an embodiment.

### [Mode for the Invention]

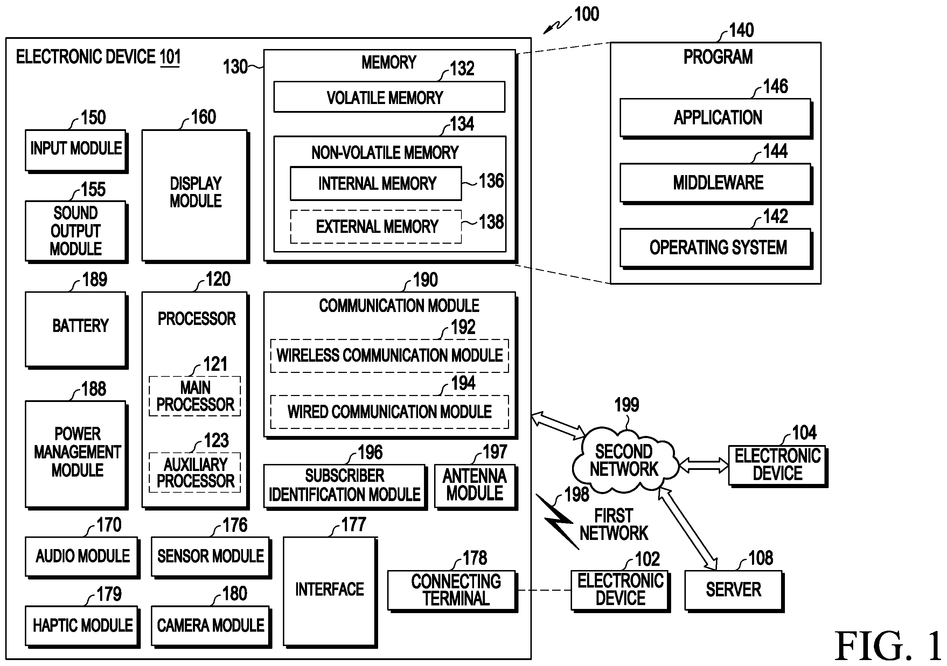

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

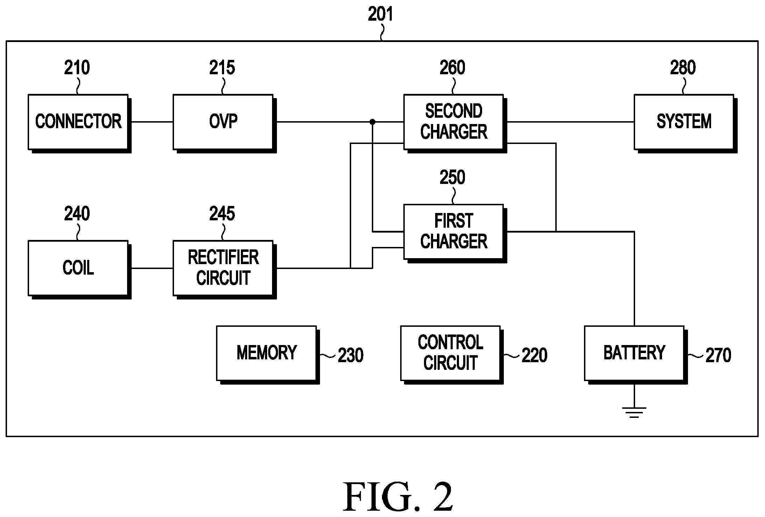

FIG. 2 is a schematic block diagram illustrating a configuration of an electronic device according to an embodiment.

Referring to FIG. 2, an electronic device 201 (e.g., the electronic device 101 of FIG. 1) according to an embodiment may include a connector 210, an over voltage protection (OVP) 215, a control circuit 220, memory 230, a coil 240, a rectifier circuit 245, a first charger (or first charging circuit) 250, a second charger (or second charging circuit) 260, a battery 270, and a system 280. The electronic device 201 according to an embodiment is not limited thereto and may be configured to further include various components or exclude some of the above components. The electronic device 201 according to an embodiment may further include all or part of the electronic device 101 illustrated in FIG. 1.

According to an embodiment, the control circuit 220 may control the overall operation of the electronic device 201. For example, the control circuit 220 may be implemented identically or similarly to the processor 120 of FIG. 1. The control circuit 220 according to an embodiment may control at least one other component (e.g., hardware or software component) of the electronic device 201 connected to the control circuit 220 by executing software (e.g., the program 140 of FIG. 1) and perform data processing or calculation based on an instruction. The instruction according to an embodiment may include a command composed of a machine language that may be processed by the electronic device 201 or the control circuit 220. For example, the instruction may include a command corresponding to an operation indication used in a program.

According to an embodiment, the control circuit 220 may include a control circuit related to control of the operation of the first charger 250 or the second charger 260.

While the electronic device 201 is shown as including one control circuit 220 in FIG. 2, this is exemplary and the technical idea of the disclosure may not be limited thereto. For example, the electronic device 201 may include at least one processor. For example, the control circuit 220 may be implemented as at least one processor.

According to an embodiment, the memory 230 (e.g., the memory 130 of FIG. 1) may store at least one instruction that causes at least one operation of the electronic device 201. When executed by the control circuit 220, the at least one instruction may enable the electronic device 201 to perform a corresponding operation.

According to an embodiment, the electronic device 201 may receive power wiredly from an external power transmitter (e.g., a travel adapter (TA)) through a connector (or wired interface). For example, based on maximum power supported by the power transmitter, the electronic device 201 may receive required power within the maximum power. For example, the power transmitter may be implemented as a programmable power supply (PPS) charger.

According to an embodiment, the connector 210 (e.g., wired interface) may include a connection portion (e.g., USB port) that may be connected to the power transmitter. For example, the connector 210 may further include a power delivery (PD) IC (not shown) for receiving power wiredly. Depending on implementation, the PD IC may be implemented as a separate component from the wired interface. The PD IC may request power required for the electronic device 201 from the power transmitter under the control of the control circuit 220.

According to an embodiment, the OVP 215 may perform a function of protecting the first charger 250 and the second charger 260 from power supplied wiredly from an external power transmitter. For example, the OVP 215 may perform an overvoltage protection function. For example, the OVP 215 may block power having a voltage greater than a specified voltage.

According to an embodiment, the electronic device 201 may wirelessly receive power from an external wireless power transmitter through the coil 240. For example, the coil 240 may receive power by electromagnetic induction or resonant induction. AC power received through the coil 240 may be rectified into DC power through the rectifier circuit 245. Further, the rectified DC power may be input or provided to the first charger 250 or the second charger 260. Depending on implementation, the rectified DC power may also be input or provided to the first charger 250.

According to an embodiment, the first charger 250 may receive power provided from the external power transmitter through the OVP 215. The first charger 250 may generate power for charging the battery 270 based on the received power. For example, the first charger 250 may support fast charging. Alternatively, the first charger 250 may generate power to be provided to the system 280 based on the received power. For example, the first charger 250 may convert the voltage of the received power into a voltage (e.g., 5V) required for the battery 270. For example, the first charger 250 may convert the voltage of the received power into a voltage required for the system 280. For example, the first charger 250 may convert the voltage of the received power at a specified ratio (e.g., 4:1, 3:1, or 2:1). The first charger 250 may supply power having the converted voltage to the battery 270. Alternatively, the first charger 250 may supply power having the converted voltage to the system 280. For example, the first charger 250 may include at least one of a direct charger, a switched capacitor voltage converter, or a switched capacitor voltage divider (SCVD).

According to an embodiment, the first charger 250 may provide power stored in the battery 270 to the system 280. For example, when a battery voltage output from the battery 270 is lower than a specified value (e.g., 3.4V), the first charger 250 may boost the battery voltage. The first charger 250 may supply the boosted battery voltage to the system 280. For example, the first charger 250 may boost the battery voltage to a voltage range (e.g., 3.4 to 4.4V) required for the system 280. For example, when the battery voltage output from the battery 270 is lower than the specified value, the electronic device 201 may boost the battery voltage using the first charger 250 and then supply an appropriate voltage to the system 280. The electronic device 201 may boost the battery voltage without using a separate booster circuit, and then supply the appropriate voltage to the system 280.

According to an embodiment, the second charger 260 may provide power supplied from an external power transmitter (or wireless power transmitter) to the battery 270 and/or the system 280. The second charger 260 may provide power stored in the battery 270 to the system 280. For example, the system 280 may refer to components of the electronic device 201. For example, the second charger 260 may be implemented as a switching charger (or interface (IF) PMIC). For example, the second charger may include a DC/DC converter, a buck converter, a buck booster, or a buck booster/converter.

According to an embodiment, the control circuit 220 may identify (or monitor) the magnitude of power (e.g., the magnitude of a voltage) output from the battery 270. Depending on implementation, identifying or monitoring the magnitude of the voltage output from the battery 270 may be performed by a fuel gauge, a limiter, an IF PMIC, and/or a processor (e.g., application processor). However, the control circuit 220 is described as an entity responsible for identifying the magnitude of the voltage in the disclosure, for convenience of description, to which the technical idea of the disclosure may not be limited.

According to an embodiment, the control circuit 220 may identify whether a voltage (hereinafter, a battery voltage) output from the battery 270 is lower than a specified voltage. For example, the specified voltage may represent a voltage that should be supplied to the system 280 to normally operate the system 280. For example, a voltage range for normally operating the system 280 may be 3.4 to 4.4V. For example, the specified voltage may be 3.4V. For example, when silicon ions are used as a negative electrode of the battery 270, the capacity of the battery 270 may increase as a negative electrode voltage is set lower due to the characteristics of the silicon ions. For example, when silicon ions are used as the negative electrode of the battery 270, the battery voltage VBAT of the battery 270 may be lower than the specified voltage. Alternatively, when silicon ions are used as the negative electrode of the battery 270, the battery voltage VBAT of the battery 270 may frequently be lower than the specified voltage.

According to an embodiment, when the battery voltage output from the battery 270 is lower than the specified voltage, the control circuit 220 may control the first charger 250 and/or the second charger 260 to boost the battery voltage to the voltage range for normally operating the system 280 and supply the boosted voltage to the system 280. When the magnitude of the voltage output from the battery 270 is lower than the specified voltage, the control circuit 220 may output a control signal to the first charger 250 and/or the second charger 260 to normally operate the system 280. Depending on implementation, the operation of outputting the control signal according to the identified magnitude of the battery voltage may be performed by the fuel gauge, the limiter, the IF PMIC, and/or the processor (e.g., application processor). However, for convenience of description, the control circuit 220 is described as outputting a control signal in the disclosure, to which the technical idea of the disclosure may not be limited.

According to an embodiment, the control circuit 220 may control the first charger 250 based on the magnitude of the battery voltage output from the battery 270. For example, the control circuit 220 may control the first charger 250 to boost the battery voltage output from the battery 270 and supply the boosted voltage to the system 280. For example, the control circuit 220 may determine an operation mode of a plurality of switches included in the first charger 250 based on the magnitude of the battery voltage output from the battery 270.

According to an embodiment, the first charger 250 may convert the battery voltage at a specified ratio (e.g., 4:1, 3:1, or 2:1) based on the determined operation mode. For example, when the battery voltage is identified as 2.5 to 2.6V, the control circuit 220 may control the first charger 250 to convert the voltage of 2.5 to 2.6V to 3.4 to 4.4V and supply the converted voltage to the system 280.

According to an embodiment, the first charger 250 may control on/off of the plurality of switches included in the first charger 250 under the control of the control circuit 220. The first charger 250 may control the on/off of the plurality of switches to convert the battery voltage to a voltage corresponding to the operation mode. Depending on implementation, the first charger 250 and/or the second charger 260 may further include a separate control circuit (not shown). Alternatively, the separate control circuit (not shown) may be included in the control circuit 220. The control circuit (not shown) may control the on/off of the plurality of switches under the control of the control circuit 220. To this end, the control circuit (not shown) may output a control signal for controlling the on/off of the plurality of switches.

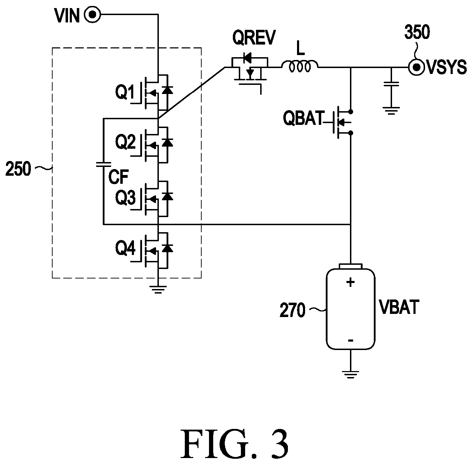

According to an embodiment, the control circuit 220 may control a switch circuit (not shown) connecting the first charger 250 and the system 280. For example, the switch circuit may include a switch (e.g., QREV in FIG. 3) arranged between the first charger 250 and the system 280. The switch circuit may further include an inductor arranged between the switch and a node for supplying a voltage to the system 280. Depending on implementation, the inductor may not be separately included in the switch circuit. In this case, the switch may be connected to an inductor included in the second charger 260. When the battery voltage is lower than the specified voltage, the control circuit 220 may connect (e.g., connect a power supply path) between the first charger 250 and the system 280 through the switch circuit. Alternatively, when the battery voltage is not lower than the specified voltage, the control circuit 220 may cut off the connection or the power supply path between the first charger 250 and the system 280 through the switch circuit. Alternatively, when charging the battery 270 using the first charger 250, the control circuit 220 may cut off the connection or the power supply path between the first charger 250 and the system 280 through the switch circuit.

For example, a separate boost circuit may be further included in the electronic device 201 to boost the battery voltage. However, since the separate boost circuit is further included in the electronic device 201, additional components may be needed to be included in the boost circuit. This may result in disadvantages in terms of cost and the inclusion of the boost circuit. In addition, additional power loss may occur due to a plurality of components included in the boost circuit.

According to an embodiment, the electronic device 201 may boost the battery voltage using the first charger 250 without a separate boost circuit and supply the boosted voltage to the system 280. Accordingly, the electronic device 201 may have advantages in terms of cost and the absence of the separate circuit. Further, the electronic device 201 may not lose additional power caused by the separate boost circuit.

According to an embodiment, the electronic device 201 may include a switch (e.g., QBAT in FIG. 3) arranged between the first charger 250 and the system 280. The switch (e.g., QBAT in FIG. 3) may be configured as a portion of the second charger or as a separate switch. The switch (e.g., QBAT in FIG. 3) may turn on/off an electrical connection between the first charger 250 and the battery 270 and system 280. FIG. 3 is a circuit diagram including an SCVD and a switch circuit according to an embodiment.

Referring to FIG. 3, according to an embodiment, an electronic device (e.g., the electronic device 201 of FIG. 2) may include the first charger 250. For example, the first charger 250 may be implemented as an SCVD or a direct charger. The first charger 250 may include a flying capacitor CF and a plurality of switches Q1, Q2, Q3, and Q4. For example, the flying capacitor CF may be connected to a point between a first switch Q1 and a second switch Q2 and to a point between a third switch Q3 and a fourth switch Q4. Although FIG. 3 illustrates the first charger 250 as including the flying capacitor CF, the flying capacitor CF may be arranged outside the first charger.

According to an embodiment, the switch QREV and an inductor L connected in series may be arranged between the first charger 250 (e.g., the point between the first switch Q1 and the second switch) and a node 350 for supplying power to a system (e.g., the system 280 of FIG. 2). For example, the switch circuit may include the switch QREV and the inductor L. According to an embodiment, the inductor L may be an inductor included in the second charger 260 (e.g., an inductor connected to the node 350 for supplying power to the system 280), and the switch QREV may be connected to the inductor included in the second charger 260.

According to an embodiment, the charger 250, for example, the point between the third switch Q3 and the fourth switch Q4 may be connected to the battery 270. The battery 270 may be connected to the node 350 for supplying power to the system 280 through a battery switch QBAT. For example, the node 350 for supplying power to the system 280 may include a node (or a connector) connecting a source of the first switch Q1 and a drain of the second switch Q2.

According to an embodiment, when it is identified that the battery voltage VBAT is lower than the specified voltage, the battery switch QBAT may be turned off or controlled to an off-state. As a result, the battery voltage VBAT may not be supplied to the system 280 as it is. Further, when it is identified that the battery voltage VBAT is lower than the specified voltage, the switch QREV may be controlled to an on-state. As a result, a first voltage based on boosting the battery voltage VBAT using the first charger 250 may be supplied to the system 280 through the switch QREV. For example, the first voltage may be higher than or equal to the specified voltage.

According to an embodiment, when it is identified that the battery voltage VBAT is lower than the specified voltage, the plurality of switches Q1, Q2, Q3, and Q4 may be turned on or off under the control of a control circuit (e.g., the control circuit 220 of FIG. 2). For example, the plurality of switches Q1, Q2, Q3, and Q4 may be alternately turned on or off according to a switching cycle of the plurality of switches Q1, Q2, Q3, and Q4. For example, the flying capacitor CF and the battery 270 may be connected in series during a first time period of the switching cycle. Further, the flying capacitor CF and the battery 270 may be connected in parallel during a second time period of the switching cycle (e.g., a time period after the first time period). A voltage that is the sum of a charging voltage of the flying capacitor CF and the battery voltage VBAT may be applied to the switch circuit (e.g., the inductor L) according to a duty ratio representing a ratio of the first time period to the switching cycle. Based on the voltage being applied to the switch circuit (e.g., the inductor L), the first voltage higher than the specified voltage may be supplied to the node 350. Accordingly, even if the battery voltage VBAT is lower than the specified voltage, the first voltage higher than the specified voltage may be supplied to the system 280.

According to an embodiment, upon receipt of power from the outside, the electronic device 201 may charge the battery 270 using the first charger 250. For example, the electronic device 201 may charge the battery 270 based on a voltage VIN input to the first charger 250. Herein, the plurality of switches Q1, Q2, Q3, and Q4 included in the first charger 250 may be alternately turned on or off.

As described above, the electronic device 201 may supply the first voltage higher than the specified voltage to the system 280, based on boosting the battery voltage VBAT using the first charger 250 without a separate boost circuit. Through this, the electronic device 201 may have advantages in terms of cost and in terms of not including the separate boost circuit.

The operations of the electronic device 201 described below may be controlled by the processor or the control circuit. However, the electronic device 201 will be described as an entity responsible for the operations, for convenience of description.

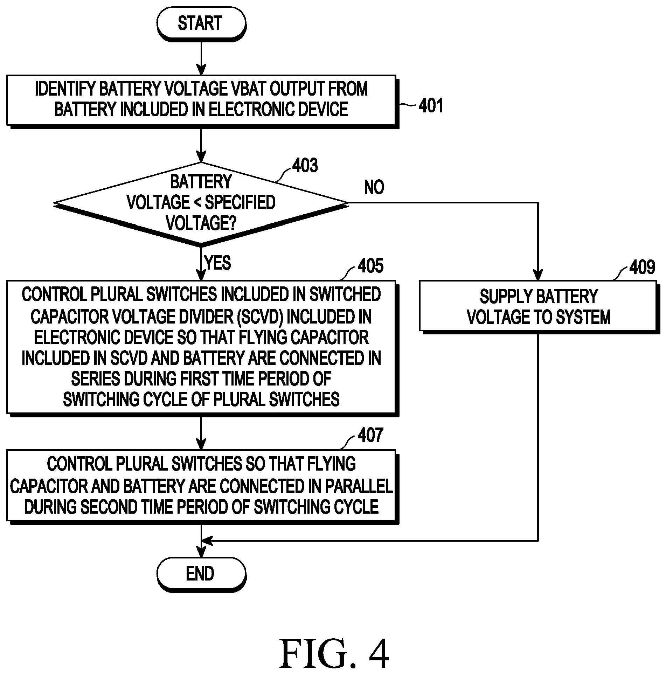

FIG. 4 is a flowchart illustrating a method of supplying a first voltage boosted from a battery voltage using an SCVD to a system by an electronic device according to an embodiment.

Referring to FIG. 4, according to an embodiment, in operation 401, the electronic device (e.g., the electronic device 201 of FIG. 2) may identify a battery voltage VBAT output from the battery (e.g., the battery 270 of FIG. 2) included in the electronic device 201.

According to an embodiment, in operation 403, the electronic device 201 may identify whether the battery voltage VBAT is lower than a specified voltage. For example, the specified voltage may represent a voltage that should be supplied to a system (e.g., the system 280 of FIG. 20) to operate the system 280 normally.

According to an embodiment, when identifying that the battery voltage VBAT is lower than the specified voltage (yes in operation 403), the electronic device 201 may control (e.g., control on/off) the plurality of switches Q1, Q2, Q3, and Q4 included in the SCVD (e.g., the first charger 250 of FIG. 2) of the electronic device 201 so that the flying capacitor CF included in the SCVD 250 and the battery 270 are connected in series during a first time period of a switching cycle of the plurality of switches Q1, Q2, Q3, and Q4 in operation 405. For example, the electronic device 201 may control the third switch Q3 among the plurality of switches Q1, Q2, Q3, and Q4 to an on-state and the remaining switches Q1, Q2, and Q4 to an off-state during the first time period of the switching cycle. Accordingly, the flying capacitor CF and the battery 270 may be connected in series to each other. For example, when identifying that the battery voltage VBAT is lower than the specified voltage, the electronic device 201 may control the battery switch QBAT to the off-state so that the battery voltage VBAT is not directly supplied to the system 280. Further, the electronic device 201 may control the switch QREV included in the switch circuit to the on-state.

According to an embodiment, in operation 407, the electronic device 201 may control (e.g., control on/off) the plurality of switches Q1, Q2, Q3, and Q4 so that the flying capacitor CF and the battery 270 are connected in parallel during a second time period (e.g., a time period after the first time period) of the switching cycle of the plurality of switches Q1, Q2, Q3, and Q4. For example, the electronic device 201 may control the second switch Q2 and the fourth switch Q4 among the plurality of switches Q1, Q2, Q3, Q4 to the on-state and the first switch Q1 and the third switch Q3 to the off-state during the second time period of the switching cycle. For example, based on a voltage that is the sum of the charging voltage of the flying capacitor CF and the battery voltage VBAT being applied to the switch circuit (e.g., the inductor L) during the first time period, and the charging voltage being applied to the switch circuit (e.g., the inductor L) during the second time period, the first voltage may be supplied to the node 350 through the switch circuit (e.g., the inductor L).

According to an embodiment, the voltage that is the sum of the charging voltage of the flying capacitor CF and the battery voltage VBAT output from the battery 270 may be applied to the switch circuit (e.g., the inductor L) according to a duty ratio that represents a ratio of the first time period to the switching cycle of the plurality of switches Q1, Q2, Q3, and Q4. For example, based on the voltage that is the sum of the charging voltage of the flying capacitor CF and the battery voltage VBAT being applied to the switch circuit (e.g., the inductor L) according to the duty ratio, a first voltage higher than the specified voltage may be supplied to the node 350 through the switch circuit (e.g., the switch QREV and the inductor L). According to an embodiment, the battery voltage VBAT may be boosted to the first voltage based on the duty ratio. Accordingly, the electronic device 201 may determine the duty ratio based on the magnitude of the battery voltage VBAT.

According to an embodiment, when it is identified that the battery voltage VBAT is lower than the specified voltage (yes in operation 403), operations 405 and 407 may be repeatedly performed. Although operations 405 and 407 are illustrated in this order, this is only an embodiment, and the order of operations 405 and 407 may be changed according to various embodiments.

According to an embodiment, when identifying that the battery voltage VBAT is not lower than the specified voltage (no in operation 403), the electronic device 201 may supply the battery voltage VBAT to the system 280 in operation 409. For example, when the electronic device 201 identifies that the battery voltage VBAT is lower than the specified voltage, the electronic device 201 may control the battery switch QBAT to the on-state so that the battery voltage VBAT is supplied to the system 280.

As described above, the electronic device 201 may supply the first voltage higher than the specified voltage to the system 280, based on boosting the battery voltage VBAT using the first charger 250 without a separate boost circuit. Through this, the electronic device 201 may have an advantage in terms of cost and in terms of not including the separate boost circuit.

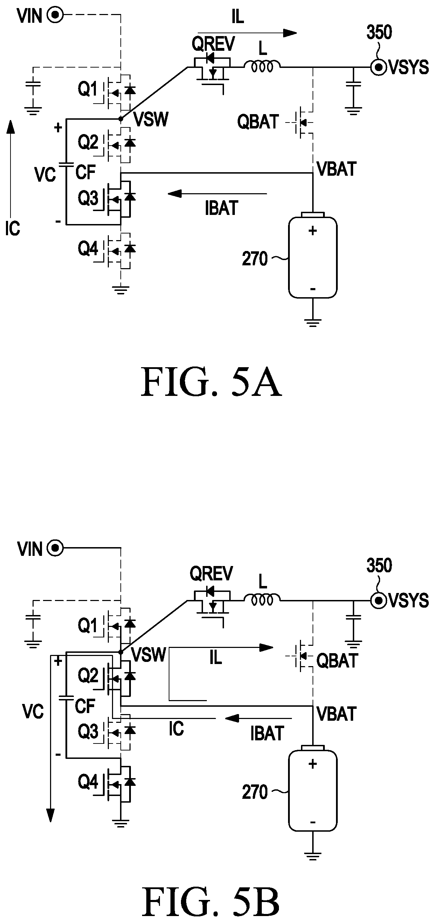

FIG. 5A is a diagram illustrating a first mode of an SCVD according to an embodiment. FIG. 5B is a diagram illustrating a second mode of the SCVD according to an embodiment.

Referring to FIGS. 5A and 5B, according to an embodiment, when identifying that a battery voltage VBAT is lower than a specified voltage, an electronic device (e.g., the electronic device 201 of FIG. 2) may operate an SCVD (e.g., the first charger 250 of FIG. 2) in the first mode and the second mode. Herein, the electronic device 201 may control the battery switch QBAT to the off-state so that the battery voltage VBAT is not directly supplied to the system 280. Further, the electronic device 201 may control the switch QREV to the on-state.

Referring to FIG. 5A, according to an embodiment, the electronic device 201 may control (e.g., control on/off) the plurality of switches Q1, Q2, Q3, and Q4 so that the flying capacitor CF included in the SCVD 250 and the battery 270 are connected in series in the first mode. For example, the electronic device 201 may control the third switch Q3 among the plurality of switches Q1, Q2, Q3, and Q4 to the on-state and the remaining switches Q1, Q2, and Q4 to the off-state in a first time period of a switching cycle. For example, the first time period may be a time period during which the SCVD 250 operates in the first mode in one switching cycle of the plurality of switches Q1, Q2, Q3, and Q4. Since the flying capacitor CF and the battery 270 are connected in series to each other, a voltage VSW that is the sum of a charging voltage VC of the flying capacitor CF and the battery voltage VBAT of the battery 270 may be applied to the switch circuit (e.g., the switch QREV and the inductor L). Herein, as the voltage VSW higher than a target voltage to be supplied to the system 280 is applied to the inductor L, the magnitude of an inductor current IL conducted to the inductor L may increase. As the flying capacitor CF and the battery 270 are connected in series to each other, the magnitudes of a battery current IBAT, a capacitor current IC, and the inductor current IL may all be equal.

Referring to FIG. 5B, according to an embodiment, the electronic device 201 may control (e.g., control on/off) the plurality of switches Q1, Q2, Q3, and Q4 so that the flying capacitor CF and the battery 270 are connected in parallel in the second mode. For example, the electronic device 201 may control the second switch Q2 and the fourth switch Q4 among the plurality of switches Q1, Q2, Q3, and Q4 to the on-state and the first switch Q1 and the third switch Q3 to the off-state in a second time period (e.g., a time period after the first time period) of the switching cycle. For example, the second time period may be a time period during which the SCVD 250 operates in the second mode in one switching cycle of the plurality of switches Q1, Q2, Q3, and Q4. For example, as the flying capacitor CF and the battery 270 are connected in parallel to each other, the voltage VSW corresponding to the charging voltage VC of the flying capacitor CF may be applied to the switch circuit (e.g., the switch QREV and the inductor L). Herein, as the voltage VSW lower than the target voltage to be supplied to the system 280 is applied to the inductor L, the magnitude of the inductor current IL conducted to the inductor L may decrease. As the flying capacitor CF and the battery 270 are connected in parallel to each other, the absolute value of the battery current IBAT may be equal to the sum of the capacitor current IC and the inductor current IL.

Referring to FIGS. 5A and 5B, according to an embodiment, based on the voltage VSW that is the sum of the charging voltage VC of the flying capacitor CF and the battery voltage VBAT being applied to the switch circuit (e.g., the switch QREV and the inductor L) during the first time period of the switching cycle, and the voltage VSW corresponding to the charging voltage VC being applied to the switch circuit (e.g., the switch QREV and the inductor L) during the second time period of the switching cycle, a first voltage VSYS may be supplied to the node 350.

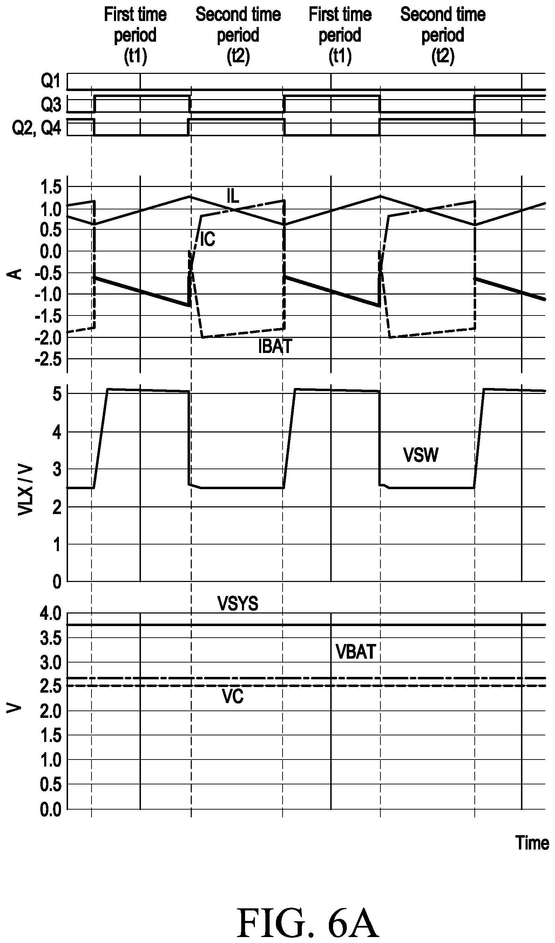

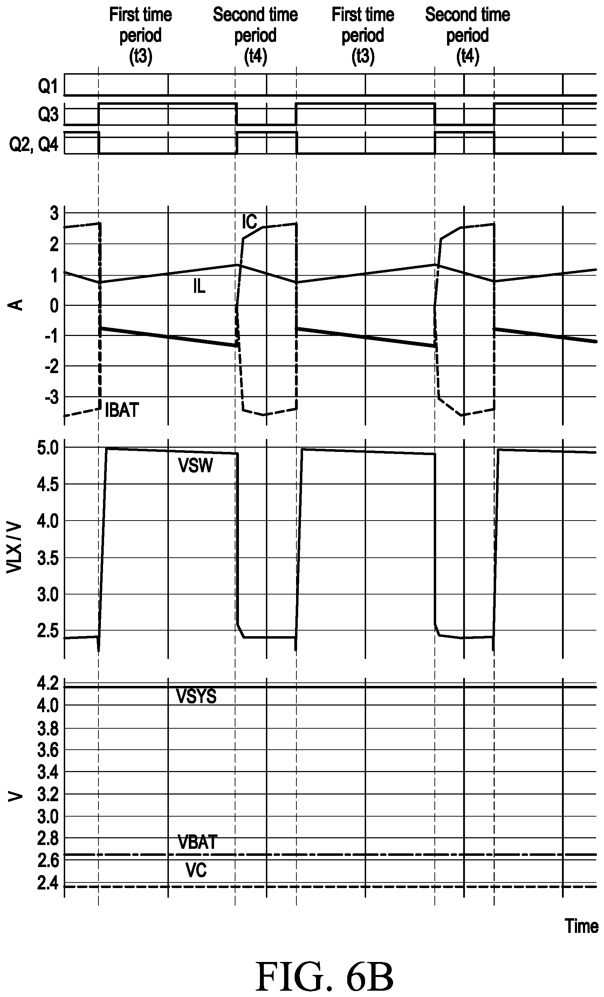

FIGS. 6A and 6B are graphs illustrating a battery voltage, a charging voltage of a flying capacitor, a first voltage supplied to a system, and a voltage applied to a switch circuit in each mode according to an embodiment.

Referring to FIG. 6A, an electronic device (e.g., the electronic device 201 of FIG. 2) may operate an SCVD (e.g., the first charger 250 of FIG. 2) in a first mode during a first time period t1 of one switching cycle of the plurality of switches Q1, Q2, Q3, and Q4. Further, the electronic device 201 may operate the SCVD 250 in a second mode during a second time period t2 of the switching cycle.

According to an embodiment, based on the flying capacitor CF and the battery 270 being connected in series during the first time period t1, the voltage VSW that is the sum of the charging voltage VC of the flying capacitor CF and the battery voltage VBAT of the battery 270 may be applied to the switch circuit (e.g., the switch QREV and the inductor L). Herein, the magnitude of the inductor current IL conducted to the inductor L may increase. Further, the magnitudes (e.g., absolute values) of the battery current IBAT, the capacitor current IC, and the inductor current IL may be equal.

According to an embodiment, based on the flying capacitor CF and the battery 270 being connected in parallel to each other during the second time period t2, the voltage VSW corresponding to the charging voltage VC of the flying capacitor CF may be applied to the switch circuit (e.g., the switch QREV and the inductor L). Herein, the magnitude of the inductor current IL conducted to the inductor L may decrease. Further, the absolute value of the battery current IBAT may be equal to the sum of the capacitor current IC and the inductor current IL.

According to an embodiment, the first voltage VSYS corresponding to an average of the voltage VSW applied to the switch circuit (e.g., the inductor L) may be applied to the node 350 for supplying power to the system 280 during a switching cycle (e.g., a time period that is the sum of the first time period t1 and the second time period t2). For example, the magnitude of the first voltage VSYS (e.g., 3.8V) may be higher than the specified voltage.

According to an embodiment, the magnitude of the first voltage VSYS may be determined based on a duty ratio representing a ratio of the first time period t1 to the switching cycle. For example, as the ratio of the first time period t1 to the switching cycle increases, the magnitude of the first voltage VSYS may increase. Further, as the ratio of the first time period t1 to the switching cycle decreases, the magnitude of the first voltage VSYS may decrease.

Referring to FIG. 6B, compared to FIG. 6A, the ratio of a first time period t3 to one switching cycle may increase. Further, compared to FIG. 6A, the ratio of a second time period t4 to one switching cycle may decrease.

According to an embodiment, the first voltage VSYS corresponding to the average of the voltage VSW applied to the switch circuit (e.g., the inductor L) during one switching cycle (e.g., a time period that is the sum of the first time period t3 and the second time period t4) may be applied to the node 350 for supplying power to the system 280. For example, the magnitude of the first voltage VSYS (e.g., about 4.2V) may be higher than the specified voltage. That is, as the ratio of the first time period t3 to one switching cycle increases, the magnitude of the first voltage VSYS may increase.

According to an embodiment, the electronic device 201 may determine the duty ratio based on the magnitude of the battery voltage VBAT. For example, as the battery voltage VBAT is lower, the duty ratio may be determined to be relatively high. Further, as the battery voltage VBAT is higher, the duty ratio may be determined to be relatively low. Depending on implementation, the electronic device 201 may control the plurality of switches Q1, Q2, Q3, and Q4 according to a fixed duty ratio. Herein, the specified voltage may be determined to be an appropriate value so that the first voltage boosted from the battery voltage VBAT may be included in an appropriate voltage range (e.g., 3.4 to 4.4V).

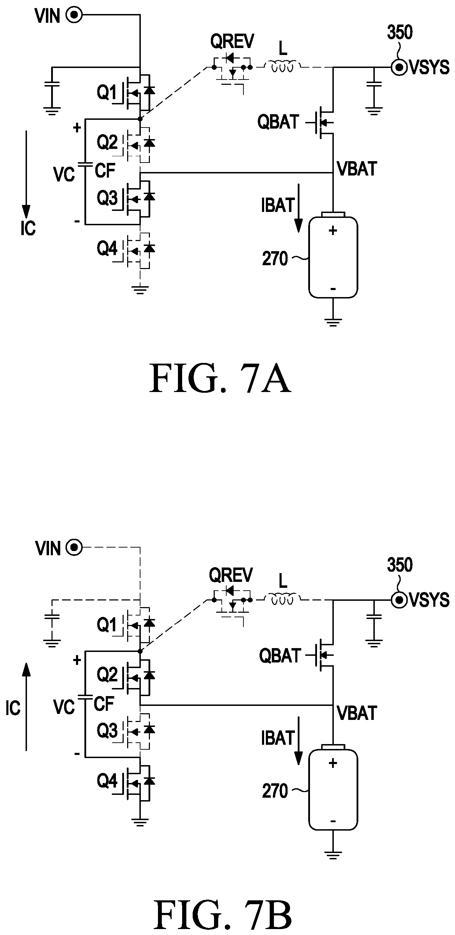

FIGS. 7A and 7B are diagrams illustrating a method of charging a battery using an SCVD according to an embodiment.

Referring to FIGS. 7A and 7B, according to an embodiment, upon receipt of power from the outside, the electronic device 201 may charge the battery 270 using the SDVD (e.g., the first charger 250 of FIG. 2). For example, the electronic device 201 may charge the battery 270 based on the input voltage VIN input to the first charger 250. Herein, the plurality of switches Q1, Q2, Q3, and Q4 included in the first charger 250 may be alternately turned on or off.

According to an embodiment, the electronic device 201 may control the switch circuit (e.g., the switch QREV) to disconnect the connection between the SCVD and the node, based on receiving power from the outside. For example, the electronic device 201 may control the switch QREV to the off-state in response to receiving the power from the outside.

Referring to FIG. 7A, according to an embodiment, the first switch Q1 and the third switch Q3 may be controlled to the on-state, and the second switch Q2 and the fourth switch Q4 may be controlled to the off-state during a first time period of one switching cycle of the plurality of switches Q1, Q2, Q3, and Q4. Herein, while the flying capacitor CF is being charged based on the input voltage VIN, the battery 270 may also be charged.

Referring to FIG. 7B, according to an embodiment, the first switch Q1 and the third switch Q3 may be controlled to the off-state, and the second switch Q2 and the fourth switch Q4 may be controlled to the on-state during a second time period (e.g., a time period after the first time period) of one switching cycle of the plurality of switches Q1, Q2, Q3, and Q4. Herein, the battery 270 may be charged, while the flying capacitor CF is discharged.

As described above, the electronic device 201 may charge the battery 270 using power received from the outside (e.g., the input voltage VIN), while controlling the plurality of switches Q1, Q2, Q3, and Q4 alternately to the on-state or the off-state.

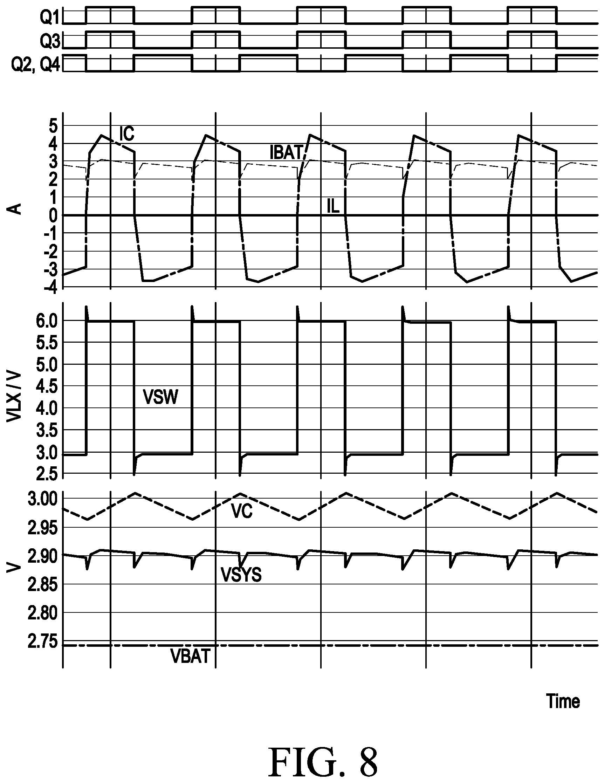

FIG. 8 is a graph illustrating a battery voltage, a charging voltage of a flying capacitor, a first voltage supplied to a system, and a voltage applied to a switch circuit, when a battery is charged according to an embodiment.

According to an embodiment, the electronic device 201 may charge the battery 270 based on the input voltage VIN input to the first charger 250. Herein, the plurality of switches Q1, Q2, Q3, and Q4 included in the first charger 250 may be alternately turned on or off. For example, when the second switch Q2 and the fourth switch Q4 are turned on or off, the first switch Q1 and the third switch Q3 may be turned off or on. Herein, as the switch QREV is controlled to the off-state, the inductor current IL may be 0A.

According to an embodiment, the flying capacitor CF may be charged by the capacitor current IC, and the charging voltage VC may also increase, during a first time period of one switching cycle of the plurality of switches Q1, Q2, Q3, and Q4. As the battery current IBAT is provided to the battery 270, the battery voltage VBAT may be applied to the battery 270.

According to an embodiment, the flying capacitor CF may be discharged by the capacitor current IC, and the charging voltage VC may also decrease, during a second time period of one switching cycle of the plurality of switches Q1, Q2, Q3, and Q4. Accordingly, the battery current IBAT may be supplied to the battery 270, and the battery voltage VBAT may be applied to the battery 270.

According to an embodiment, a duty ratio representing the ratio of the first time period to one switching cycle may be 50%. For example, the length of the first time period and the length of the second time period may be equal. Depending on implementation, the length of the first time period and the length of the second time period may be set differently.

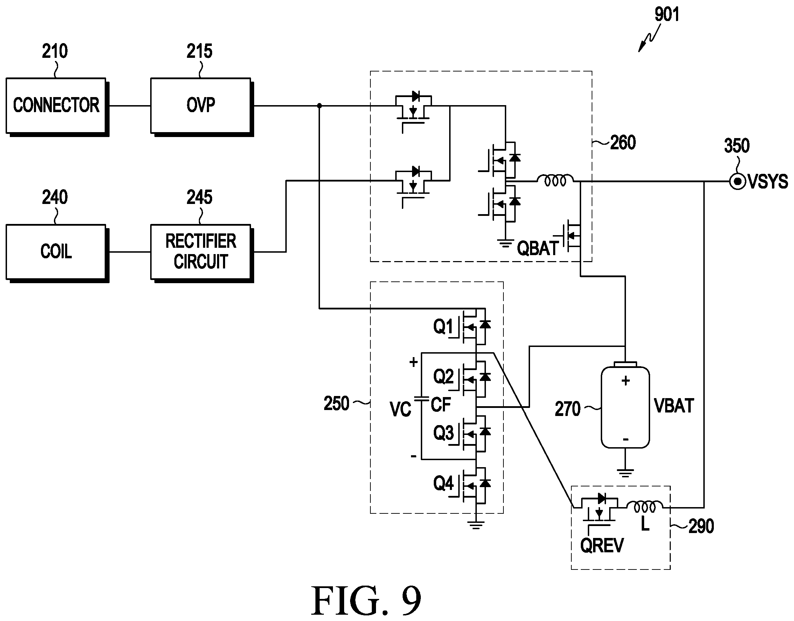

FIG. 9 is a diagram illustrating a switch circuit arranged between an SCVD and a node for supplying power to a system according to an embodiment.

Referring to FIG. 9, according to an embodiment, a switch circuit 290 may include the switch QREV and the inductor L. The switch QREV and the inductor L may be connected in series to each other. For example, the switch circuit 290 may be arranged between the first charger 250 and the node 350 for supplying power to the system 280. For example, one end of the switch QREV may be connected to a point between the first switch Q1 and the second switch Q2. For example, the switch QREV and the flying capacitor CF may be connected in parallel to each other at the point. The other end of the switch QREV may be connected to the inductor L. One end of the inductor L may be connected to the switch QREV. The other end of the inductor L may be connected to the node 350 for supplying power to the system 280.

According to an embodiment, based on the voltage VSW that is the sum of the charging voltage VC of the flying capacitor CF and the battery voltage VBAT being applied to the switch circuit 290 according to the duty ratio representing the ratio of the first time period to the switching cycle of the first charger 250, the first voltage VSYS higher than the specified voltage may be supplied to the node 350 through the switch circuit 290.

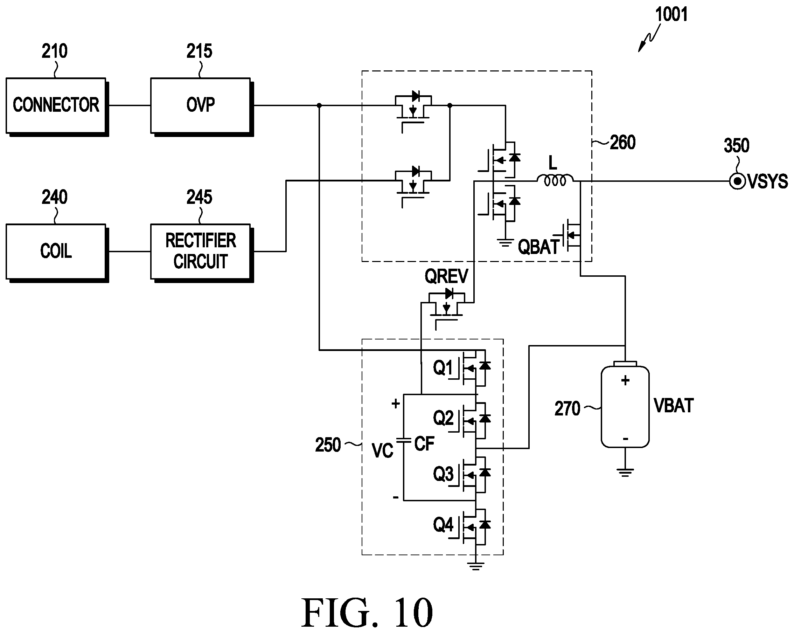

FIG. 10 is a diagram illustrating a switch circuit arranged between an SCVD and a node for supplying power to a system according to an embodiment.

Referring to FIG. 10, according to an embodiment, the switch circuit may include the switch QREV. One end of the switch QREV may be connected to the first charger 250 (e.g., a point between the first switch Q1 and the second switch Q2, for example, a point where the switch QREV and the flying capacitor CF may be connected in parallel to each other). The other end of the switch QREV may be connected to the inductor L included in the second charger 260. For example, the switch circuit may share the inductor L included in the second charger 260, without including a separate inductor.

According to an embodiment, based on the voltage VSW that is the sum of the charging voltage VC of the flying capacitor CF and the battery voltage VBAT being applied to the inductor L included in the second charger 260 according to the duty ratio representing the ratio of the first time period to the switching cycle of the first charger 250, the first voltage VSYS higher than the specified voltage may be supplied to the node 350.

As described above, based on boosting the battery voltage VBAT using the first charger 250 without a separate boost circuit, the electronic device 201 may supply the first voltage higher than the specified voltage to the system 280. Through this, the electronic device 201 may have the effect of reducing cost. Further, the electronic device 201 may have the effect of securing a larger arrangement space.

According to an embodiment, the electronic device 201 may include the battery 270, the SCVD 250 including the plurality of switches Q1, Q2, Q3, Q4 and the flying capacitor CF, and configured to convert a voltage of externally supplied power according to a specified ratio and supply the converted voltage to the battery or the system of the electronic device, the switch circuit arranged between the SCVD and the node for supplying power to the system, and the control circuit 220. According to an embodiment, the control circuit may be configured to identify a battery voltage VBAT output from the battery. According to an embodiment, the control circuit may be configured to, based on identifying that the battery voltage is lower than a specified voltage, control the plurality of switches included in the SCVD so that the flying capacitor and the battery are connected in series during a first time period of a switching cycle of the plurality of switches. According to an embodiment, the control circuit may be configured to control the plurality of switches so that the flying capacitor and the battery are connected in parallel during a second time period after the first time period of the switching cycle. According to an embodiment, based on applying a voltage that is a sum of a charging voltage of the flying capacitor and the battery voltage to the switch circuit according to a duty ratio representing a ratio of the first time period to the switching cycle, a first voltage higher than the specified voltage may be supplied to the node through the switch circuit.

The embodiment allows the omission of a bypass boost converter, thereby improving costs and the footprint of the circuitry.

According to an embodiment, the control circuit may be configured to control a third switch (Q3) among the plurality of switches (Q1, Q2, Q3, Q4) to an on-state and remaining switches (Q1, Q2, Q4) among the plurality of switches (Q1, Q2, Q3, Q4) to an off-state during the first time period of the switching cycle. According to an embodiment, the control circuit may be configured to control a second switch (Q2) and a fourth switch (Q4) among the plurality of switches (Q1, Q2, Q3, Q4) to an on-state and a first switch (Q1) and the third switch (Q3) among the plurality of switches (Q1, Q2, Q3, Q4) to an off-state during the second time period of the switching cycle.

In first time period, the flying capacitor and battery are connected in series to supply a voltage higher than the first voltage VSYS to increase the inductor current. In the second time period, the flying capacitor and battery are connected in parallel and supply a battery voltage lower than the first voltage VSYS to reduce inductor current.

According to an embodiment, the control circuit may be configured to determine the duty ratio of the plurality of switches based on a magnitude of the battery voltage. According to an embodiment, the battery voltage may be boosted to the first voltage based on the duty ratio.

According to an embodiment, the control circuit may be configured to control a switch included in the switch circuit to an on-state to supply the first voltage to the node, based on identifying that the battery voltage is lower than the specified voltage.

According to an embodiment, the first voltage may be supplied to the node through an inductor included in the switch circuit, based on a voltage that is a sum of a charging voltage of the flying capacitor and the battery voltage being applied to the inductor during the first time period and the charging voltage being applied to the inductor during the second time period.

According to an embodiment, one end of a switch included in the switch circuit may be connected to a point between a first switch and a second switch among the plurality of switches, and the other end of the switch may be connected to the inductor included in the switch circuit.

According to an embodiment, the electronic device may further include a switching charger configured to supply power to at least one of the battery or the system based on power provided from an external source. According to an embodiment, the control circuit may be configured to supply, using the switching charger, the first voltage to the node while disconnecting a connection between the switching charger and the battery, based on identifying that the battery voltage is lower than the specified voltage.

According to an embodiment, the first voltage may be supplied to the node, based on a voltage that is a sum of the charging voltage of the flying capacitor and the battery voltage being applied to an inductor included in the switching charger during the first time period and the charging voltage being applied to the inductor included in the switching charger during the second time period.

According to an embodiment, one end of a switch included in the switch circuit may be connected to a point between a first switch and a second switch among the plurality of switches, and the other end of the switch may be connected to the inductor included in the switching charger.

According to an embodiment, the control circuit may be configured to control the switch circuit so that the connection between the SCVD and the node is cut off based on receiving power from an external source. According to an embodiment, the control circuit may be configured to charge the battery using the power based on controlling the plurality of switches to an on-state and an off-state according to the switching cycle.

According to an embodiment, the switch QREV included in the switch circuit 290 may be directly connected to the point between the first switch Q1 and the second switch Q2. According to an embodiment, the switch QREV included in the switch circuit 290 may be directly connected to the inductor L included in the switch circuit 290. According to an embodiment, the point between the third switch Q3 and the fourth switch Q4 may be directly connected to the battery 270. According to an embodiment, the switching charger 260 is connected between the battery 270 and the node 350. According to an embodiment, the switch circuit 290 may consist of a switch QREV and an inductor L.

According to an alternative embodiment, instead of a SCVD, the electronic device 201 may comprise a direct charger or a switched capacitor voltage converter. According to an embodiment, the electronic device 201 does not include any bypass boost converter. According to an embodiment, the plurality of switches may consist of four switches.

According to an embodiment, a method of operating an electronic device may include identifying a battery voltage VBAT output from a battery included in the electronic device. According to an embodiment, the method of operating the electronic device may include, based on identifying that the battery voltage is lower than a specified voltage, controlling a plurality of switches included in a switched capacitor voltage divider SCVD so that a flying capacitor included in the SCVD and the battery are connected in series during a first time period of a switching cycle of the plurality of switches. According to an embodiment, the method of operating the electronic device may include controlling the plurality of switches so that the flying capacitor and the battery are connected in parallel during a second time period after the first time period of the switching cycle. According to an embodiment, based on applying a voltage that is a sum of a charging voltage of the flying capacitor and the battery voltage to a switch circuit arranged between the SCVD (250) and a node (350) for supplying power to a system (280) according to a duty ratio representing a ratio of the first time period to the switching cycle, a first voltage higher than the specified voltage may be supplied to the node through the switch circuit.

According to an embodiment, the method of operating the electronic device may further include controlling a third switch among the plurality of switches to an on-state and remaining switches among the plurality of switches to an off-state during the first time period of the switching cycle. According to an embodiment, the method of operating the electronic device may further include controlling a second switch and a fourth switch among the plurality of switches to an on-state and the first switch and the third switch among the plurality of switches to an off-state during the second time period of the switching cycle.

According to an embodiment, the method of operating the electronic device may further include determining the duty ratio of the plurality of switches based on a magnitude of the battery voltage. According to an embodiment, the battery voltage may be boosted to the first voltage based on the duty ratio.

According to an embodiment, the method of operating the electronic device may further include controlling a switch included in the switch circuit to an on-state to supply the first voltage to the node, based on identifying that the battery voltage is lower than the specified voltage.

According to an embodiment, the first voltage may be supplied to the node through an inductor included in the switch circuit, based on a voltage that is a sum of a charging voltage of the flying capacitor and the battery voltage being applied to the inductor during the first time period and the charging voltage being applied to the inductor during the second time period.

According to an embodiment, one end of a switch included in the switch circuit may be connected to a point between a first switch and a second switch among the plurality of switches, and the other end of the switch may be connected to the inductor included in the switch circuit.

According to an embodiment, the electronic device may further include a switching charger configured to supply power to at least one of the battery or the system based on power provided from an external source. According to an embodiment, the method of operating the electronic device may further include supplying, using the switching charger, the first voltage to the node while disconnecting a connection between the switching charger and the battery, based on identifying that the battery voltage is lower than the specified voltage.

According to an embodiment, the first voltage may be supplied to the node, based on a voltage that is a sum of the charging voltage of the flying capacitor and the battery voltage being applied to an inductor included in the switching charger during the first time period and the charging voltage being applied to the inductor included in the switching charger during the second time period.

According to an embodiment, one end of a switch included in the switch circuit may be connected to a point between a first switch and a second switch among the plurality of switches, and the other end of the switch may be connected to the inductor included in the switching charger.

A non-transitory computer-readable recording medium may store instructions which, when executed by at least one processor, enable an electronic device to identify a battery voltage VBAT output from a battery included in the electronic device, based on identifying that the battery voltage is lower than a specified voltage, control a plurality of switches included in a switched capacitor voltage divider SCVD so that a flying capacitor included in the SCVD and the battery are connected in series during a first time period of a switching cycle of the plurality of switches, and control the plurality of switches so that the flying capacitor and the battery are connected in parallel during a second time period after the first time period of the switching cycle. According to an embodiment, based on applying a voltage that is a sum of a charging voltage of the flying capacitor and the battery voltage to a switch circuit arranged between the SCVD (250) and a node (350) for supplying power to a system (280) according to a duty ratio representing a ratio of the first time period to the switching cycle, a first voltage higher than the specified voltage may be supplied to the node through the switch circuit.

Since many features (except those of the independent claims) are optional only, the features of the preferred embodiments have been described in connection with "may". Nevertheless, said preferred embodiments have to understood to be disclosed as specific preferred combinations as shown in the drawings and therefore features shown in the drawings are to be understood as a real preferred combination for the present invention which however does not restrict the scope of the invention.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201) comprising:
a battery (270);
a switched capacitor voltage divider (SCVD) (250) including a plurality of switches (Q1, Q2, Q3, Q4) and a flying capacitor (CF), and configured to convert a voltage of externally supplied power according to a specified ratio and supply the converted voltage to the battery or a system (280) of the electronic device;
a switch circuit arranged between the SCVD and a node (350) for supplying power to the system; and
a control circuit (220) configured to:
identify a battery voltage (VBAT) output from the battery,
based on identifying that the battery voltage is lower than a specified voltage, control the plurality of switches included in the SCVD so that the flying capacitor and the battery are connected in series during a first time period of a switching cycle of the plurality of switches, and
control the plurality of switches so that the flying capacitor and the battery are connected in parallel during a second time period after the first time period of the switching cycle,
wherein based on applying a voltage that is a sum of a charging voltage of the flying capacitor and the battery voltage to the switch circuit according to a duty ratio representing a ratio of the first time period to the switching cycle, a first voltage higher than the specified voltage is supplied to the node through the switch circuit.

2. The electronic device of claim 1, wherein the control circuit is configured to:
control a third switch (Q3) among the plurality of switches (Q1, Q2, Q3, Q4) to an on-state and remaining switches (Q1, Q2, Q4) among the plurality of switches (Q1, Q2, Q3, Q4) to an off-state during the first time period of the switching cycle, and
control a second switch (Q2) and a fourth switch (Q4) among the plurality of switches (Q1, Q2, Q3, Q4) to an on-state and a first switch (Q1) and the third switch (Q3) among the plurality of switches (Q1, Q2, Q3, Q4) to an off-state during the second time period of the switching cycle.

3. The electronic device of claim 1 or 2, wherein the control circuit is configured to determine the duty ratio of the plurality of switches based on a magnitude of the battery voltage, and
wherein the battery voltage is boosted to the first voltage based on the duty ratio.

4. The electronic device of any one of claims 1 to 3, wherein the control circuit is configured to control a switch included in the switch circuit to an on-state to supply the first voltage to the node, based on identifying that the battery voltage is lower than the specified voltage.

5. The electronic device of any one of claims 1 to 4, wherein the first voltage is supplied to the node through an inductor included in the switch circuit, based on a voltage that is a sum of a charging voltage of the flying capacitor and the battery voltage being applied to the inductor during the first time period and the charging voltage being applied to the inductor during the second time period.

6. The electronic device of any one of claims 1 to 5, wherein one end of a switch included in the switch circuit is connected to a point between a first switch and a second switch among the plurality of switches, and the other end of the switch is connected to the inductor included in the switch circuit.

7. The electronic device of any one of claims 1 to 6, further comprising a switching charger configured to supply power to at least one of the battery or the system based on power provided from an external source,
wherein the control circuit is configured to supply, using the switching charger, the first voltage to the node while disconnecting a connection between the switching charger and the battery, based on identifying that the battery voltage is lower than the specified voltage.

8. The electronic device of any one of claims 1 to 7, wherein the first voltage is supplied to the node, based on a voltage that is a sum of the charging voltage of the flying capacitor and the battery voltage being applied to an inductor included in the switching charger during the first time period and the charging voltage being applied to the inductor included in the switching charger during the second time period.

9. The electronic device of any one of claims 1 to 8, wherein one end of a switch included in the switch circuit is connected to a point between a first switch and a second switch among the plurality of switches, and the other end of the switch is connected to the inductor included in the switching charger.

10. The electronic device of any one of claims 1 to 9, wherein the control circuit is configured to:
control the switch circuit so that the connection between the SCVD and the node is cut off based on receiving power from an external source, and
charge the battery using the power based on controlling the plurality of switches to an on-state and an off-state according to the switching cycle.

11. A method of operating an electronic device (201), comprising:
identifying a battery voltage (VBAT) output from a battery (270) included in the electronic device;
based on identifying that the battery voltage is lower than a specified voltage, controlling a plurality of switches (Q1, Q2, Q3, Q4) included in a switched capacitor voltage divider, SCVD (250), so that a flying capacitor (CF) included in the SCVD and the battery are connected in series during a first time period of a switching cycle of the plurality of switches; and
controlling the plurality of switches so that the flying capacitor and the battery are connected in parallel during a second time period after the first time period of the switching cycle,
wherein based on applying a voltage that is a sum of a charging voltage of the flying capacitor and the battery voltage to a switch circuit arranged between the SCVD (250) and a node (350) for supplying power to a system (280) according to a duty ratio representing a ratio of the first time period to the switching cycle, a first voltage (VSYS) higher than the specified voltage is supplied to the node through the switch circuit.

12. The method of claim 11, further comprising:
controlling a third switch (Q3) among the plurality of switches (Q1, Q2, Q3, Q4) to an on-state and remaining switches (Q1, Q2, Q4) among the plurality of switches (Q1, Q2, Q3, Q4) to an off-state during the first time period of the switching cycle; and
controlling a second switch (Q2) and a fourth switch (Q4) among the plurality of switches (Q1, Q2, Q3, Q4) to an on-state and a first switch (Q1) and the third switch (Q3) among the plurality of switches (Q1, Q2, Q3, Q4) to an off-state during the second time period of the switching cycle.

13. The method of claim 11 or 12, further comprising determining the duty ratio of the plurality of switches based on a magnitude of the battery voltage,
wherein the battery voltage is boosted to the first voltage based on the duty ratio.

14. The method of any one of claims 11 to 13, further comprising controlling a switch included in the switch circuit to an on-state to supply the first voltage to the node, based on identifying that the battery voltage is lower than the specified voltage.

15. A non-transitory computer-readable recording medium storing instructions which, when executed by at least one processor, enable an electronic device (201) to:
identify a battery voltage (VBAT) output from a battery (270) included in the electronic device;
based on identifying that the battery voltage is lower than a specified voltage, control a plurality of switches (Q1, Q2, Q3, Q4) included in a switched capacitor voltage divider, SCVD (250), so that a flying capacitor (CF) included in the SCVD and the battery are connected in series during a first time period of a switching cycle of the plurality of switches; and
control the plurality of switches so that the flying capacitor and the battery are connected in parallel during a second time period after the first time period of the switching cycle,
wherein based on applying a voltage that is a sum of a charging voltage of the flying capacitor and the battery voltage to a switch circuit arranged between the SCVD (250) and a node (350) for supplying power to a system (280) according to a duty ratio representing a ratio of the first time period to the switching cycle, a first voltage (VSYS) higher than the specified voltage is supplied to the node through the switch circuit.
